# EUROPEAN PATENT SPECIFICATION

(11) **EP 1 957 775 B1**
(45) Date of publication and mention of the grant of the patent: **01.07.2009**
(21) Application number: 06831577.9
(22) Date of filing: 16.11.2006
(51) Int. Cl.: F02C 3/22, F02C 9/40

(54) **GAS TURBINE SYSTEM EMPLOYING STEEL PLANT GAS AS FUEL**
GAS AUS STAHLANLAGEN ALS BRENNSTOFF VERWENDENDES GASTURBINENSYSTEM
SYSTEME A TURBINE A GAZ UTILISANT COMME COMBUSTIBLE UN GAZ REJETE PAR UNE INSTALLATION SIDERURGIQUE

(30) Priority: 17.11.2005 IT TO20050807
(43) Date of publication of application: 20.08.2008
(73) Proprietor: ANSALDO ENERGIA S.P.A., 16152 Genova (IT)
(72) Inventor: PRATICO', Ferdinando, I-16145 Genova (IT); TARTAGLIA, Amedeo, I-16012 Busalla (IT)
(74) Representative: Boggio, Luigi
(86) International application number: PCT/IB2006/003237
(87) International publication number: WO 2007/057754

(56) References cited:
- EP-A- 0 029 075
- CH-A- 349 447

## Description

### TECHNICAL FIELD

The present invention relates to a gas turbine system employing steel plant gas as fuel, i.e. mixtures of gases produced in steel plants in the making of steel. The present invention may be applied in particular to both combination- and single-cycle electric power plants.

### BACKGROUND ART

As is known, steel plants comprise blast furnaces (producing so-called BFG, i.e. "Blast Furnace Gas"); electric converters (producing so-called BOFG, i.e. "Basic Oxygen Furnace Gas"); and coke ovens (producing so-called COG, i.e. "Coke Oven Gas") in which so-called "carbon coke" necessary to steelmaking is produced.

Steel plant gas is produced at slightly higher than atmospheric pressure. Since the combustion chambers of gas turbine systems, however, call for fuel gas at a higher pressure, steel plant gas must be compressed by a compressor, which absorbs a considerable part (typically 15-30%) of the system's power output (e.g. EP-A-029 075).

Moreover, steel plant gas has a relatively poor low heat value as compared with so-called natural gas, and must therefore normally be burned in large quantities.

To avoid stoppages in electric power production during periods when steel plant gas is unavailable, the system must be run by fuelling the combustion chamber with natural gas.

In known solutions, to improve efficiency and reduce the overall layout of the system, the steel plant gas compressor is fitted to the same drive shaft as the gas turbine. As a result, the compressor is run continuously - even when the system is started up, idling, or fuelled with natural gas - thus resulting in power absorption which produces no electric power, and hence in wasted expenditure.

In known solutions of the above type, the only way of avoiding such mechanical power absorption is to disconnect a flange rigidly connecting the steel plant gas compressor to the gas turbine drive shaft. Which operation is an extremely time-consuming job involving shutting down the system to cool the component parts, disconnecting the compressor, and starting up the system again. Obviously, while the system is shut down, no electric power is produced, which is to be avoided at all costs.

### DISCLOSURE OF INVENTION

It is an object of the present invention to provide a gas turbine system employing steel plant gas as fuel, and which provides a straightforward, low-cost solution to the above problems.

According to the present invention, there is provided a gas turbine system employing steel plant gas as fuel; the system comprising:
- at least a combustion air compressor;
- at least a steel plant gas compressor;
- a combustion chamber receiving the compressed combustion air and compressed steel plant gas;
- a turbine driven by the exhaust gas from said combustion chamber to supply mechanical energy to said combustion air compressor, to a user machine, in particular an alternator, and to a drive shaft; and
- transmission means for connecting said drive shaft and said steel plant gas compressor to each other;
and being **characterized in that** said transmission means comprise connecting/disconnecting means for disconnecting said steel plant gas compressor from said drive shaft while the drive shaft is rotating.

Said connecting/disconnecting means preferably comprise a torque converter.

### BRIEF DESCRIPTION OF THE DRAWINGS

A non-limiting embodiment of the invention will be described by way of example with reference to the accompanying drawings, in which:
Figure 1 shows a diagram of a preferred embodiment of the gas turbine system employing steel plant gas as fuel, according to the present invention;
Figure 2 shows a larger-scale, partly sectioned, schematic view in perspective of a detail of the Figure 1 system.

### BEST MODE FOR CARRYING OUT THE INVENTION

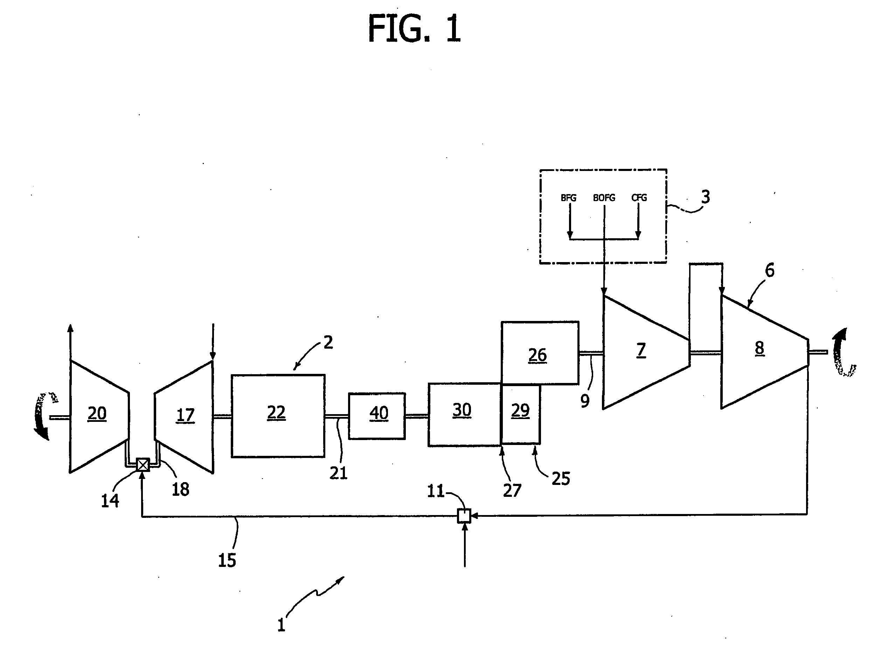

Number 1 in Figure 1 indicates a gas turbine system (shown schematically) forming part of a combination-cycle electric power plant 2 (shown partly), and which may be fuelled with natural gas and/or steel plant gas.

More specifically, the term "steel plant gas" is intended to mean mixtures of gases produced in steel plants 3 in the making of steel, and which are referred to, for example, as BFG ("Blast Furnace Gas") when produced by blast furnaces, BOFG ("Basic Oxygen Furnace Gas") when produced by electric converters, or COG ("Coke. Oven Gas") when produced by coke ovens, in which so-called "carbon coke" necessary to steelmaking is produced.

On reaching system 1, the steel plant gas is fed into a compressor 6 comprising a low-pressure stage 7, defined by an axial compressor, and a high-pressure stage 8, defined by a radial compressor, which are coaxial with each other and driven by rotation of a shaft 9.

The steel plant gas compressed by compressor 6, and the natural gas flow into one another inside a regulating device 11, which regulates fuel gas flow to a combustion chamber 14 along a feed line 15 between device 11 and chamber 14.

Chamber 14 is also supplied by a feed line 18 with combustion air from a compressor 17.

System 1 also comprises a turbine 20, which receives the exhaust gas from chamber 14 and produces mechanical energy to drive compressors 17, 6 and an alternator 22 for producing electric power.

More specifically, alternator 22 and a drive shaft 21, driven by turbine 20, are located along the same axis as compressor 17 and turbine 20.

Shaft 21 is parallel to shaft 9, and is connected to shaft 9 by a transmission 25 comprising an overgear 26 for transmitting motion to and increasing the rotation speed of shaft 9.

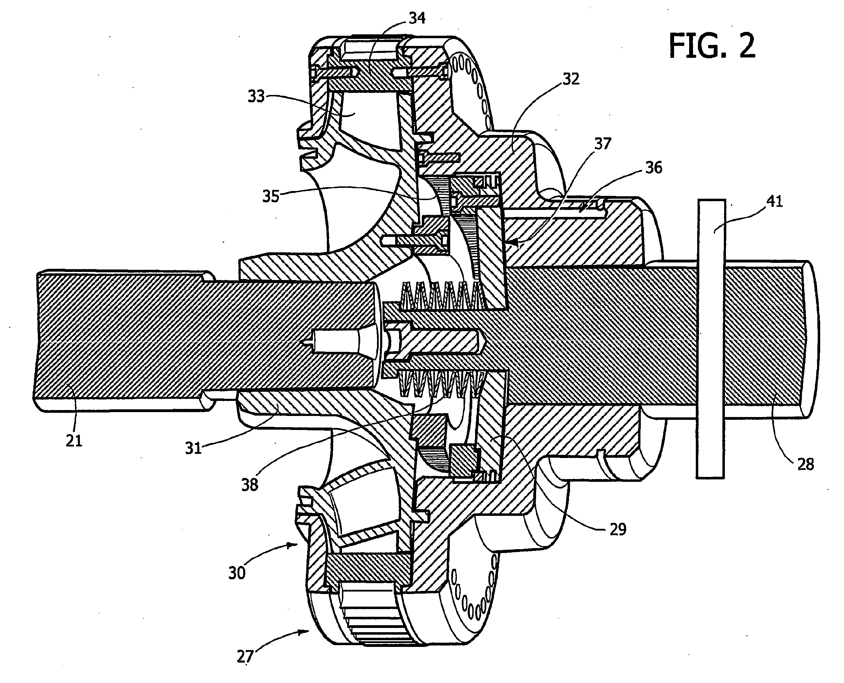

Transmission 25 also comprises a connecting/disconnecting device 27, which is interposed axially between shaft 21 and an input shaft 28 of overgear 26 (Figure 2), and can be activated to disconnect shaft 9 while shaft 21 is rotating, i.e. operating.

With reference to Figure 2, device 27 comprises a mechanical coupling member 29 that can be activated to connect shafts 21 and 28 with a direct drive; and a torque converter 30, which, when connecting the shafts, accelerates shaft 28 to the speed of shaft 21 before member 29 is activated.

In the example shown, converter 30 is known, e.g. of the type known by the trade name "Vosycon" (registered trademark), houses member 29, and comprises two axially-facing bodies 31, 32 fitted in fixed positions to the ends of shafts 21 and 28 respectively. Converter 30 also comprises an impeller 33 supported by body 31 to compress a hydraulic fluid radially outwards; and radial turbine blades 34 supported by body 32 to receive the hydraulic fluid from impeller 33 and so rotate shaft 28.

Member 29 is defined by a disk fitted in angularly fixed manner to shaft 28 and/or body 32. Disk 29 slides axially between a forward position, in which it is fixed angularly to body 31 by teeth 35, and a withdrawn position, in which it is disconnected from body 31 and, hence, from shaft 21. Disk 29 is slid into the forward position by hydraulic pressure control along a line 36 - one end of which is formed directly inside body 32, and which comes out inside a chamber 37 defined by the disk itself and by body 32 - and in opposition to the elastic force of a device 38 defined by a number of Belleville washers and interposed axially between disk 29 and the axial end of shaft 28.

As shown schematically in the attached drawings, system 1 also comprises a so-called safety joint 40 (Figure 1) interposed axially between device 27 and alternator 22; and a stop device 41 (shown schematically in Figure 2) which is activated to arrest shaft 9 when shaft 28 is disconnected from shaft 21, and so permit safe maintenance of compressor 6.

In actual use, compressor 6 is disconnected from turbine 20 as follows:
- device 11 is adjusted to switch from steel plant gas to natural gas supply;
- compressor 6 is exhausted by means of recirculating conduits and exhaust valves (not shown);
- converter 30 is started up by feeding hydraulic fluid to impeller 33 and so filling converter 30;
- member 29 is disconnected from body 31 by reducing the pressure inside chamber 37, and, at the same time, shafts 28 and 21 are maintained at the same rotation speed (synchronized speed) by converter 30;
- converter 30 is adjusted hydraulically to reduce the speed of shaft 28 until the shaft stops;
- converter 30 is turned off (set to idling) by draining off all the hydraulic fluid;
- device 41 is activated to lock shafts 28 and 9.

Once the above operations, which may be automated, are completed, system 1 runs on natural gas without driving compressor 6.

Device 27 is also used to connect compressor 6, by performing opposite operations in reverse order to those described above for disconnection.

Using device 27 to disconnect compressor 6 from turbine 20, alternator 22 is obviously supplied with greater mechanical power, and so produces more electric power as compared with known solutions in which compressor 6 necessarily remains connected to shaft 21.

At relatively little extra cost for device 27 (roughly 0.4% of system cost), mechanical power absorption is reduced, thus resulting in a roughly 5-13% increase in electric power production.

Moreover, downtime of plant 2 is reduced as compared with known solutions, by no longer having to shut down plant 2 to disconnect compressor 6, which can be disconnected while turbine 20 is running.

Another advantage is the improvement in efficiency when starting up turbine 20 and alternator 22, again by virtue of reducing power absorption by eliminating rotation of compressor 6.

Moreover, when connecting compressor 6, shaft 28 is accelerated to the same speed as shaft 21 gradually, by virtue of converter 30, thus preventing locking of overgear 26.

Clearly, changes may be made to system 1 as described herein without, however, departing from the scope of the present invention.

In particular, overgear 26 may be omitted or differ from the one described by way of example; and/or device 27 and/or 41 may be fitted directly to shaft 9; and/or direct drive between shafts 21 and 28 may be a different or differently located device from the one described by way of example; and/or compressor 17 and turbine 20 may also have a number of stages; and/or system 1 may be used to drive a user machine other than alternator 22, e.g. a pump or another compressor, or for a single-cycle electric power plant.

## Claims

1. A gas turbine system (1) employing steel plant gas as fuel; the system comprising:
- at least a combustion air compressor (17);
- at least a steel plant gas compressor (6);
- a combustion chamber (14) receiving the compressed combustion air and compressed steel plant gas;
- a turbine (20) driven by the exhaust gas.from said combustion chamber (14) to supply mechanical energy to said combustion air compressor (17), to a user machine, in particular an alternator (22), and to a drive shaft (21); and
- transmission means (25) for connecting said drive shaft (21) and said steel plant gas compressor (6) to each other;
and being **characterized in that** said transmission means (25) comprise connecting/disconnecting means (27) for disconnecting said steel plant gas compressor (6) from said drive shaft (21) while the drive shaft (21) is rotating.

2. A system as claimed in Claim 1, **characterized in that** said connecting/disconnecting means (27) comprise mechanical coupling means (29) that can be activated to connect said drive shaft (21) with a direct drive to a further drive shaft (28) driving said steel plant gas compressor (6); and synchronizing means (30) for synchronizing the speed of said further drive shaft (28) with the speed of said drive shaft (21) prior to activation of said mechanical coupling means (29).

3. A system as claimed in Claim 1, **characterized in that** said synchronizing means (30) are hydraulic.

4. A system as claimed in any one of the foregoing Claims, **characterized in that** said connecting/disconnecting means (27) comprise a torque converter (30).

5. A system as claimed in any one of the foregoing Claims, **characterized by** comprising mechanical locking means (41) for arresting rotation of an input shaft (9) of said steel plant gas compressor (6), when said steel plant gas compressor (6) is disconnected from said drive shaft (21).

6. A system as claimed in any one of the foregoing Claims, **characterized in that** said transmission means (25) comprise an overgear (26).

7. A system as claimed in any one of the foregoing Claims, **characterized by** comprising an electric power generator (22) driven by said turbine (20).

8. A system as claimed in Claim 7, **characterized by** forming part of a combination-cycle electric power plant.

9. A system as claimed in Claim 7, **characterized by** forming part of a single-cycle electric power plant.

## Patentansprüche

1. Gasturbinensystem (1), das Stahlwerksgas als Treibstoff verwendet; wobei das System umfasst:
- wenigstens einen Verbrennungsluftkompressor (17);
- wenigstens einen Stahlwerksgaskompressor (6);
- eine Verbrennungskammer (14), die die komprimierte Verbrennungsluft und komprimiertes Stahlwerksgas empfängt;
- eine Turbine (20), die von dem Abgas aus der Verbrennungskammer (14) angetrieben wird, um den Verbrennungsluftkompressor (17), eine Nutzmaschine, insbesondere einen Generator (22), und eine Antriebswelle (21) mit mechanischer Energie zu versorgen; und
- ein Übertragungsmittel (25), um die Antriebswelle (21) und den Stahlwerksgaskompressor (6) miteinander zu verbinden;
und **dadurch gekennzeichnet, dass** das Übertragungsmittel (25) ein Verbindungs-/Trennmittel (27) umfasst, um den Stahlwerksgaskompressor (6) von der Antriebswelle (21) zu trennen, während sich die Antriebswelle (21) dreht.

2. System nach Anspruch 1, **dadurch gekennzeichnet, dass** das Verbindungs-/Trennmittel (27) ein mechanisches Koppelmittel (29) umfasst, das aktiviert werden kann, um die Antriebswelle (21) über einen unmittelbaren Antrieb mit einer weiteren Antriebswelle (28) zu verbinden, die den Stahlwerksgaskompressor (6) antreibt; und ein Synchronisiermittel (30), um die Geschwindigkeit der weiteren Antriebswelle (28) mit der Geschwindigkeit der Antriebswelle (21) zu synchronisieren, bevor das mechanische Koppelmittel (29) aktiviert wird.

3. System nach Anspruch 1, **dadurch gekennzeichnet, dass** das Synchronisiermittel (30) hydraulisch ist.

4. System nach einem der vorstehenden Ansprüche, **dadurch gekennzeichnet, dass** das Verbindungs-/Trennmittel (27) einen Drehmomentwandler (30) umfasst.

5. System nach einem der vorstehenden Ansprüche, welches ein mechanisches Sperrmittel (41) umfasst, um eine Rotation einer Eingangswelle (9) des Stahlwerksgaskompressors (6) anzuhalten, wenn der Stahlwerksgaskompressor (6) von der Antriebswelle (21) getrennt wird.

6. System nach einem der vorstehenden Ansprüche, **dadurch gekennzeichnet, dass** das Übertragungsmittel (25) ein Übersetzungsgetriebe (26) umfasst.

7. System nach einem der vorstehenden Ansprüche, welches einen elektrischen Generator (22) umfasst, der von der Turbine (20) angetrieben wird.

8. System nach Anspruch 7, welches Teil eines Kombinationskraftwerks ist.

9. System nach Anspruch 7, welches Teil eines Einfach-Durchlauf-Kraftwerks ist.

## Revendications

1. Système de turbine à gaz (1) utilisant un gaz rejeté par une installation sidérurgique en tant que combustible, comprenant :
- au moins un compresseur d'air de combustion (17) ;
- au moins un compresseur de gaz (6) rejeté par une installation sidérurgique ;
- une chambre de combustion (14) recevant l'air de combustion comprimé et le gaz rejeté par l'installation sidérurgique comprimé ;
- une turbine (20) entraînée par le gaz d'échappement provenant de ladite chambre de combustion (14) pour alimenter en énergie mécanique ledit compresseur d'air de combustion (17), une machine d'utilisateur, en particulier un alternateur (22) et un arbre d'entraînement (21) ; et
- des moyens de transmission (25) pour raccorder ledit arbre d'entraînement (21) et ledit compresseur de gaz (6) rejeté par une installation sidérurgique entre eux ;
et étant **caractérisé en ce que** lesdits moyens de transmission (25) comprennent des moyens de connexion / déconnexion (27) pour déconnecter ledit compresseur de gaz (6) rejeté par une installation sidérurgique dudit arbre d'entraînement (21) alors que l'arbre d'entraînement (21) tourne.

2. Système selon la revendication 1, **caractérisé en ce que** lesdits moyens de connexion/ déconnexion (27) comprennent des moyens de couplage mécanique (29) qui peuvent être activés pour raccorder ledit arbre d'entraînement (21) avec un entraînement direct à un autre arbre d'entraînement (28) entraînant ledit compresseur de gaz (6) rejeté par une installation sidérurgique ; et des moyens de synchronisation (30) pour synchroniser la vitesse dudit autre arbre d'entraînement (28) avec la vitesse dudit arbre d'entraînement (21) avant l'activation desdits moyens de couplage mécanique (29).

3. Système selon la revendication 1, **caractérisé en ce que** lesdits moyens de synchronisation (30) sont hydrauliques.

4. Système selon l'une quelconque des revendications précédentes, **caractérisé en ce que** lesdits moyens de connexion / déconnexion (27) comprennent un convertisseur de couple (30).

5. Système selon l'une quelconque des revendications précédentes, **caractérisé en ce qu'**il comprend des moyens de blocage mécanique (41) pour arrêter la rotation d'un arbre d'entrée (9) dudit compresseur de gaz (6) rejeté par une installation sidérurgique, lorsque ledit compresseur de gaz (6) rejeté par une installation sidérurgique est déconnecté dudit arbre d'entraînement (21).

6. Système selon l'une quelconque des revendications précédentes, **caractérisé en ce que** lesdits moyens de transmission (25) comprennent une vitesse surmultipliée (26).

7. Système selon l'une quelconque des revendications précédentes, **caractérisé en ce qu'**il comprend un générateur de puissance électrique (22) entraîné par ladite turbine (20).

8. Système selon la revendication 7, **caractérisé en ce qu'**il fait partie d'une centrale électrique à cycle combiné.

9. Système selon la revendication 7, **caractérisé en ce qu'**il fait partir d'une centrale électrique à cycle unique.
